(19) Europäisches Patentamt
European Patent Office
Office européen des brevets

(11) **EP 1 980 973 A1**

(12) **EUROPEAN PATENT APPLICATION**
published in accordance with Art. 158(3) EPC

(43) Date of publication:
**15.10.2008 Bulletin 2008/42**

(21) Application number: **07707489.6**

(22) Date of filing: **26.01.2007**

(51) Int Cl.:
*G06F 21/24* (2006.01)    *G06F 13/00* (2006.01)
*G06F 17/30* (2006.01)    *G06F 21/20* (2006.01)

(86) International application number:
**PCT/JP2007/051257**

(87) International publication number:
**WO 2007/088785 (09.08.2007 Gazette 2007/32)**

(84) Designated Contracting States:
**DE FR GB**

(30) Priority: **31.01.2006 JP 2006021729**
**09.02.2006 JP 2006032707**

(71) Applicant: **Hewlett-Packard Development Company, L.P.**
**Houston TX 77070 (US)**

(72) Inventor: **SUGAHARA, Taro**
**Suginami-ku, Tokyo 168-8585 (JP)**

(74) Representative: **Exell, Jonathan Mark**
**Williams Powell**
**Staple Court**
**11 Staple Inn Buildings**
**London, WC1V 7QH (GB)**

(54) **PERSONAL INFORMATION LEAKAGE PREVENTIVE DEVICE AND METHOD**

(57) Conventional service providing systems personalized according to the user's personal information need to provide personal information. Therefore, there has been a problem that personal information might be leaked by service providers. A reliable proxy is installed between a user terminal and a service provider server to manage the personal information on the user. The proxy receives information necessary to create a content from the service provider server, creates a content reflecting the personal information from the information necessary to create the content, and transmits it to the user's terminal A countermeasure against estimation of personal information is taken for even a request of a user to acquire a sub-content and so forth.

FIG. 1

## Description

### TECHNICAL FIELD

The present invention relates to a method and a device for enabling a service user to receive a personalized service from a service provider without passing personal information on the service user to the service provider. The service in this context implies product information, search results, and information obtained by personalizing the product information and the search results, which are provided by the service provider. Moreover, the personal information implies information which relates to a person, and which the person generally does not want to be disclosed to others. Examples of the personal information include a name, address, date of birth, and gender.

The personalized service implies a service tailored to a person based on the personal information belonging to the individual user. An example of the personalized service is to provide a female with information on women's clothes reflecting preference information included in personal information on the female, whereas to provide a male with information on men's clothes reflecting preference information included in personal information on this male.

### BACKGROUND ART

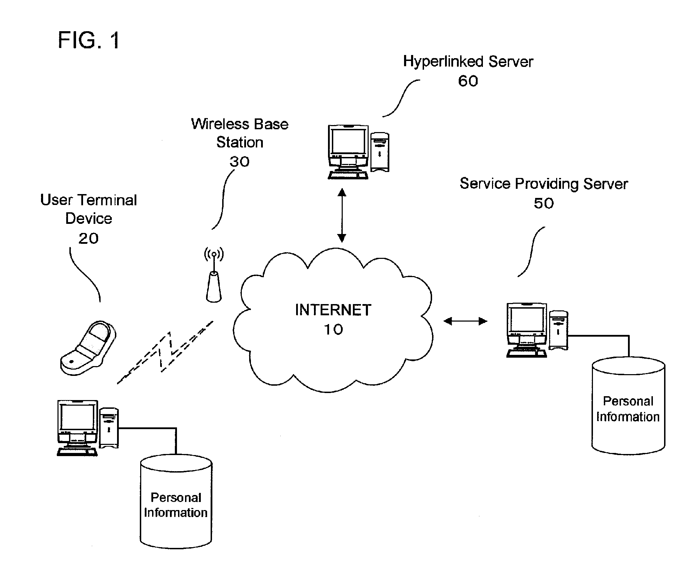

There are well known service providing systems, which provide a user with commercial products matching needs of the user based on the user's personal information and the preference information. FIG. 1 is a schematic diagram showing an example thereof. A user accesses a service providing server (50) from a user terminal device (20) via the Internet (10).

In those service providing systems, service providers hold personal information such as purchase history in many cases. In this case, a user may be damaged by a leakage of the personal information.

As a method of using a service while a user is anonymized, namely, while an identity of the user is not revealed, there is disclosed JP 2002-183092 A, "SYSTEM FOR PROVIDING PERSONALIZED SERVICE." This is a method in which a proxy anonymizes a service user by provides the user with a user identifier for hiding an identity of the user, and the service user uses a personalized service as an anonymous user. However, according to this technology, a service providing server cannot provide content containing an embedded name of a user such as "Hello! Mr. Taro Suzuki", because the personalization is done by the server. In other words, there is a limit in the personalization.

It is conceivable that, in order to receive a personalized service, a user terminal or a proxy personalizes the service so that personal information is not given to a service provider. However, in such a case, it is necessary to verify that the personal information is not leaked by a message transmitted to a service providing server by the personalized service, or the like. As a method for the verification, it is conceivable to apply an "information flow analysis" described in "Non-patent Document 1." However, if this method is strictly applied, there arises a defect that a range of services which are successfully verified becomes narrower.

Patent Document 1: JP 2002-183092 A "SYSTEM FOR PROVIDING PERSONALIZED SERVICE"
Non-patent Document 1: Kobayashi Naoki, Shirane Keita, Type-based Information Flow Analysis for a Low-level Language, Vol.20, No.2, pp. 2-21

### DISCLOSURE OF THE INVENTION

### PROBLEMS TO BE SOLVED BY THE INVENTION

It is therefore an object of the present invention to provide a device, a method, and the like which enable a use of a service based on personal information such as preferences of a person without providing a service provider with the personal information. According to the conventional technologies, when a user uses a service according to individual preferences and the like of the user, it is necessary to "directly" provide a service provider with personal information on the user such as gender, age, address, and cellular phone number. All the service providers are not necessarily reliable service providers which sufficiently manage the personal information. In other words, it cannot be denied that there are service providers who do not sufficiently manage the personal information against a leakage thereof.

As described above, when the personal information is given to the service provider, the personal information collected by the service provider may leak to other service providers for some reason, and may be misused. For example, spam mails may be sent to a service user who has provided an email address, or a user may become a victim of a "furikome sagi" (billing fraud) if the user has provided a phone number. Moreover, when a user is identified as an elderly person living alone based on the gender, age, address, and the like, there may arise a security problem.

### MEANS FOR SOLVING THE PROBLEMS

A description will now be given of means disclosed in the present invention in order to solve those problems.

[Claim 1]
Claim 1, as will be described in Example 1 of the present invention, is provided for a case in which content displayed by a browser software program does not contain other content (hereinafter, referred to as "subcontent") such as images and audio data, or hyperlinks, and discloses, in a system in which a service providing server, a proxy, and a user terminal device used by a service user are connected with each other via a network, a system which prevents personal information from leaking by the following means (a) to (e):

(a) means for transmitting, by the user terminal device, a content obtaining request which is used for obtaining content on the service providing server to the proxy;
(b) means for, by the proxy, receiving the content obtaining request and transmitting the content obtaining request to the service providing server;
(c) means for transmitting, by the service providing server, one or more content templates corresponding to the content obtaining request, and a rule, which is used to select one content template by using personal information on the service user and to generate content reflecting the personal information on the user from the content template, to the proxy;
(d) means for, by the proxy, selecting one content template by using the personal information on the user based on the rule, generating content reflecting the personal information on the user from the content template, and transmitting the content to the user terminal device; and
(e) means for displaying, by the user terminal device, the content by using a browser software program.

[Claim 2]
Claim 2, as will be described in Example 2 of the present invention, is provided for a case in which content displayed by the browser software program contains other subcontents and does not contain hyperlinks, and discloses the system according to claim 1 further including the following means (a) to (g) when the user terminal device displays the content by using the browser software program:

(a) means for, upon a subcontent being necessary for displaying the content, transmitting, by the user terminal device, a subcontent obtaining request which is used for obtaining the subcontent to the proxy;
(b) means for receiving, by the proxy, the subcontent obtaining request;
(c) means for, by the proxy, determining sets of subcontent obtaining requests necessary for displaying content generated from each content template for each content, and, upon each of the sets of the subcontent obtaining requests being the same, transmitting the subcontent obtaining requests contained in each of the sets of the subcontent obtaining requests in a predetermined sequence to the service providing server;
(d) means for, by the proxy, determining sets of subcontent requesting requests necessary for displaying content generated from each content template for each content, and, upon each of the sets of the subcontent obtaining requests not being the same, transmitting all the subcontent obtaining requests in a predetermined sequence to the service providing server;
(e) means for transmitting, by the service providing server, subcontent corresponding to all the received subcontent obtaining requests to the proxy;
(f) means for, by the proxy, storing the received subcontent, and of the stored subcontent, transmitting the subcontent requested by the user terminal device to the user terminal device; and
(g) means for displaying, by the user terminal device, the subcontent by using the browser software program.

[Claim 3]
Claim 3, as will be described in Example 3 of the present invention, is provided for a case in which content displayed by the browser software program contains hyperlinks, the network includes one or more hyperlinked server, and the user terminal device displays the content by using the browser software program, and discloses the system according to claim 1 or 2 further including the following means (a) to (g):

(a) means for, upon receiving an operation for accessing a hyperlink from a user, transmitting, by the user terminal device, a hyperlinked content obtaining request for obtaining a hyperlinked content to the proxy;
(b) means for receiving, by the proxy, the hyperlinked content obtaining request from the user terminal device;
(c) means for, by the proxy, determining sets of hyperlinked content obtaining requests corresponding to hyperlinks contained in content for each of content generated from each content template, and, upon each of the sets of the hyperlinked content obtaining requests being the same, transmitting the hyperlinked content obtaining requests to the hyperlinked server;
(d) means for, by the proxy, determining sets of hyperlinked content obtaining requests corresponding to hyperlinks contained in each content for each of content generated from each content template, and, upon each of the sets of the hyperlinked content obtaining requests not being the same, transmitting a predetermined warning message to the user terminal device;
(e) means for, by the hyperlinked server, receiving the hyperlinked content obtaining request and transmitting a corresponding content to the proxy;
(f) means for transmitting, by the proxy, the received content to the user terminal device; and
(g) means for displaying, by the user terminal device, the received content or the predetermined warning message by using the browser software program.

[Claim 4]

Claim 4, as will be described in Example 4 of the present invention, is provided for a case in which content displayed by a browser software program contains hyperlinks, a service providing server transmits a set of linked web pages to a proxy, and the proxy stores those linked web pages in the proxy, and discloses, in a system in which a user terminal device, the proxy, the service providing server, and a hyperlinked server are connected with each other via a network, a system which prevents personal information from leaking by the following means (a) to (i):

(a) means for transmitting, by the user terminal device, a content obtaining request which is used for obtaining content on the service providing server to the proxy;
(b) means for, by the proxy, receiving the content obtaining request, and transmitting the content obtaining request to the service providing server;
(c) means for transmitting, by the service providing server, content template corresponding to the content obtaining request, a rule which is used to select one content template based on personal information and to generate content reflecting the personal information on the user from the content template, and content which is referred to by hyperlinks contained in the content templates;
(d) means for storing, by the proxy, the content templates and the rule, and the content referred to by the hyperlinks in a cache memory;
(e) means for, by the proxy, determining, for each content template, a set of hyperlink obtaining requests corresponding to hyperlinks that are contained in content generated from the content template or are contained in content that are linked by hyperlinks in the content and are stored in cache memory, and link to contents other than any content in the cache memorycontent template, determining whether each of the sets is the same, and, upon each set being not the same, transmitting a predetermined warning message to the user terminal device;
(f) means for, by the proxy, selecting one content template by using the personal information on the user based on the rule, generating content reflecting the personal information on the user, and transmitting the content to the user terminal device;
(g) means for, by the user terminal device, receiving and displaying the content, and, upon receiving an operation for accessing a hyperlink from the user, transmitting a hyperlinked content obtaining request for obtaining a hyperlinked content to the proxy;
(h) means for, by the proxy, searching the cache memory for the content corresponding to the hyperlinked content obtaining request, and transmitting the content to the user terminal device; and
(i) means for displaying, by the user terminal device, the received content or displaying the predetermined warning message by using a browser software program.

[Claim 5]
Claim 5 discloses, in the system described in claims 1 to 4, a system in which the user terminal device and the proxy are physically integrated to each other.
[Claim 6]
Claim 6 discloses, in the system described in claim 1, a personal information leakage preventive method including the following steps (a) to (e):

(a) a step of transmitting, by the user terminal device, a content obtaining request which is used for obtaining content on the service providing server to the proxy;
(b) a step of, by the proxy, receiving the content obtaining request and transmitting the content obtaining request to the service providing server;
(c) a step of transmitting, by the service providing server, one or more content template corresponding to the content obtaining request, and a rule, which is used to select one content template by using personal information on the service user and to generate content reflecting the personal information on the user from the content template, to the proxy;
(d) a step of, by the proxy, selecting one content template by using the personal information on the user based on the rule, generating content reflecting the personal information on the user, and transmitting the content to the user terminal device; and
(e) a step of displaying, by the user terminal device, the content by using a browser software program.

EFFECTS OF THE INVENTION

According to the present invention, a service user, without providing a service provider with personal information on the service user, can use a service based on the personal information, thereby largely reducing a possibility of generating the above-mentioned various problems and the like due to the leakage of the personal information.
Moreover, it is not necessary for the service provider to manage personal information on service users.

BRIEF DESCRIPTION OF THE DRAWINGS

FIG. 1 is a view showing an overview of a system for providing personalized service according to conventional technologies.
FIG. 2A is an information flow diagram in the system for providing personalized service according to the conventional technologies.
FIG. 2B is an information flow diagram in the system for providing personalized service according to the conventional technologies.

FIG. 2C is an information flow diagram in the system for providing personalized service according to the conventional technologies.

FIG. 3 is a view showing an overview of a system for providing personalized service according to the present invention.

FIG. 4 is a diagram showing a proxy according to the present invention.

FIG. 5A is an information flow diagram in the system for providing personalized service according to the present invention.

FIG. 5B is an information flow diagram in the system for providing personalized service according to the present invention.

FIG. 5C is an information flow diagram in the system for providing personalized service according to the present invention.

FIG. 6 is a diagram showing an overview of the system for providing personalized service according to the present invention.

FIG. 7 is a view showing a search menu of the system for providing personalized service according to the present invention.

FIG. 8 is a view showing an example of personal information according to the present invention.

FIG. 9 is a view showing an example of a personalized content according to the present invention.

FIG. 10 is a view showing an example of the personalized content according to the present invention.

FIG. 11 is a view showing an example of the personalized content according to the present invention.

FIG. 12 is a view showing an example of the personalized content according to the present invention.

FIG. 13 is a view showing an example of the personalized content according to the present invention.

FIG. 14 is a view showing an example of the personalized content according to the present invention.

FIG. 15 is a view describing contents of a PCGP according to Example 3 of the present invention.

FIG. 16 is a view describing contents of an extended PCGP according to Example 4 of the present invention.

FIG. 17 is a view describing contents of the extended PCGP according to Example 4 of the present invention.

FIG. 18 is a flowchart describing a flow of Example 1 of the present invention.

FIG. 19 is a flowchart describing a flow of Example 2 of the present invention.

FIG. 20 is a flowchart describing a flow of Example 3 of the present invention.

FIG. 21 is a flowchart describing a flow of Example 4 of the present invention.

BEST MODE FOR CARRYING OUT THE INVENTION

A description will now be given of best modes. First, a description will be given of a basic concept relating to acquisition and drawing method of content on the WWW.

(1) Contents Acquire/Draw Method on WWW

On the world wide web (WWW), various types of information (programs in addition to data) is provided by service providers on the Internet, and service users can use a web browser (hereinafter, referred to as browser in the specification of the present invention) on a user terminal device such as a personal computer (PC) or a cellular phone to view and use the information. The information is referred to as "content" hereinafter.

The content is provided on service providing servers connected to the Internet, and a uniform resource locator (URL) is used to identify content on the service providing server (web server). A URL indicates a location of a resource on the Internet, and is composed of a scheme such as a protocol used to obtain the resource, an IP address of a server (server machine) on which the resource is located, a port number thereof, a path which indicates a location of the resource on the server, and the like.

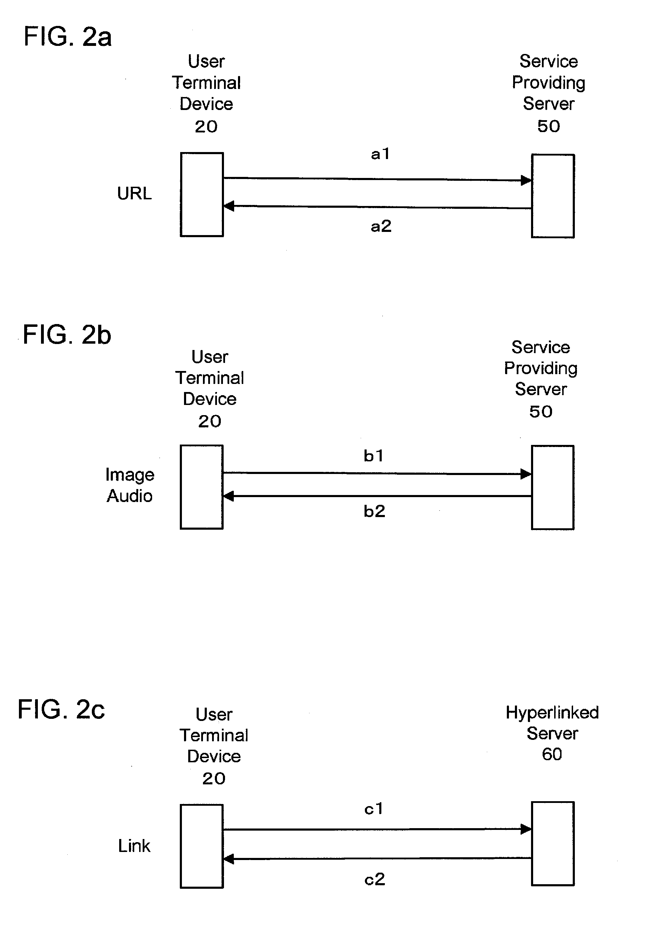

Referring to FIG. 2A, a description will be given of a flow of information. The service user enters a URL of content to be viewed in an input unit of the browser (not shown). The browser of a user terminal device (20) transmits a request to a service providing server (50) according to the entered URL (a1), and receives the content from the corresponding server (a2). The browser displays the received content on a display unit of the user terminal device.

What is displayed depends on a format of the received content. For example, the content may be only character information, and may not refer to other contents. When the content is image information, the image information is drawn to be displayed on a screen, and further, when the content is audio information, the information is replayed to be output as audio from a loudspeaker or the like (FIG. 2B). For that purpose, the browser accesses a stored location of the information (b1), and obtains necessary information therefrom (b2).

Moreover, when the content includes a hyperlink, and the user views the hyperlinked content (FIG. 2C), the browser can access a hyperlinked server (60) (c1), obtain necessary information therefrom (c2), and display the obtained information on the display unit of the user terminal device.

On this occasion, content is described according to the hyper text markup language (HTML). According to the HTML, it is possible to describe a reference to another content such as a reference to image data.

Further, a link to a hyperlinked server can be easily described.

(2) Example of HTML Document

An example of a simple HTML document is shown below.

```
1    <html>
2    <head>
3    <title>example 1</title>
```

```
4    </head>
5    <body>
6    Place a photograph below.<br/>
7    <img  src='http://host_a:8080/img/example0.jpg'/
     ><br/>
8    <a href=http : //host_b : 9090/example0. html'〉
9    This is a hyperlink
10   </a><br/>
11   Place a photograph below.<br/>
12   <img  src=' http://host_a:8080/img/example1.jpg'
     /><br/>
13   <a href=http://host_b:9090/example1. html' >
14   This is a hyperlink
15   </a>
16   </body>
17   </html>
```

(2-1) About HTML Tags

The HTML document extends from <html> (line 1) to</html> (line 17). According to the html, a portion enclosed between <XXX> and </XXX>, which are referred to as tags (start tag and end tag, respectively), or a portion indicated by a tag <XXX/>, which is a combination of the start tag and the eng tag, is considered as one element. The elements can be nested.

(2-2) About "head" Tag and "body" Tag

An HTML document is composed of a head element containing the head tags, and a body element containing the body tags. In the head element, metadata such as a title of the HTML document is written. On the other hand, in the body element, a body of the HTML document is written. The body is composed of strings which are descriptive sentences and elements enclosed by tags.

(2-3) About Image Data

Here, an img element specified by the img tags indicates that image data is embedded therein. The element specified by the tags can have additional information as an attribute. For example, an img element uses the src attribute to specify a URL at which an image is located.

(2-4) About Hyperlinks

Moreover, an "a" element specified by the "a" tags represents a hyperlink, and indicates that a portion enclosed by the tags is associated with (linked to) content located at a URL specified by the href attribute.

(3) Drawing by Browser

A description will now be given of how the browser draws an HTML document on a display unit (not shown) of the user terminal device.

1 (line 6). The browser draws a string "Place a photograph below".

2 (line 6). Since <br/> indicates a line feed, the browser changes a drawing position to a next line.

3 (line 7). Since <img...> which indicates that an image is to be placed appears, the browser obtains content (image data) specified by a URL indicated by the "src". Specifically, the browser transmits an HTTP request which requests the port number 8080 of a server whose host name is host_a for the content located at a path "/img/example0.jpg", thereby obtaining the content from the server.

4 (line 7). The browser draws the obtained image data.

5 (line 7). Since <br/> indicates a line feed, the browser changes the drawing position to a next line.

6 (lines 8 to 10). Since <a...>This is a hyperlink</a> means a hyperlink, the string "This is a hyperlink" is drawn in a underlined or colored fashion to show a hyperlink.

7 (line 10). Since <br/> indicates a line feed, the browser changes the drawing position to a next line.

8 (line 11). The browser draw a string "Place a photograph below".

9 (line 11). Since <br/> indicates a line feed, the browser changes the drawing position to a next line.

10 (line 12). Since <img...> which indicates that an image is to be placed appears, content (image data) specified by a URL indicated by the "src" is obtained. Specifically, the browser transmits an HTTP request which requests the port number 8080 of the server whose host name is host_a for the content located at a path "/img/example1.jpg", thereby obtaining the content from the server.

11 (line 12). The browser draws the obtained image data.

12 (line 12). Since <br/> indicates a line feed, the browser changes the drawing position to a next line.

13 (lines 13 to 15). Since <a...>This is a hyperlink</a> means a hyperlink, the string "This is a hyperlink" is drawn in a underlined or colored fashion to show a hyperlink.

14 (Line 17). End.

(3-1) Classification of Contents

Herein, contents displayed by the browser are classified into the following three types in the specification of the present invention. In the examples, a description will be given according to the classification.

(a) Content which does not refer to other subcontent

In general, content described in the HTML contains references to other content such as images and audio data required for drawing its content. In this class, content which does not refer to other content is considered. In the specification of the present invention, content which is required for drawing certain content is referred to as "subcontent".

(b) Content which refers to other subcontents

Content in this class refers to other subcontent for drawing the content.

When the browser draws content which a user wants to view, as in the above example, the browser usually automatically obtains subcontent. On some browsers, a service user can set whether image data and the like are obtained automatically or not. If the service user selects "Not obtain automatically", the browser will not automatically obtain an image content. In the specification of the present invention, for ease of description, it is assumed that the browser automatically obtains image data and the like.

(c) Content which refers to a hyperlinked content (including a hyperlink by means of the "form" tags)

A hyperlink is shown as a string or an image highlighted by an underline or color on a display screen of the user terminal device. Clicking of this part will show the corresponding hyperlinked content. The content referred to by the hyperlink is obtained by a positive operation of a service user such as clicking by the service user on the viewed content.

It should be noted that content is obtained generally by means of the hyper text transfer protocol (HTTP) on the WWW. The browser transmits an HTTP request to a server. The HTTP request contains a path specifying content on the server. The server transmits the content specified by the path contained in the request as an HTTP response to the browser.

(4) Personalization of Content

When content is provided, the content is tailored to each of service users based on personal information on the service users. As a result, even if the same URL is entered on the browser, different content is transmitted from the server depending on each of the service users. This is referred to as personalization of content.

The personalization of content is carried out by a program on the server, which dynamically selects or generates content. In the program, how to generate content based on personal information on a service user, namely, a profile, preference information, history of past content acquisition, and purchase history of the individual user is described. According to conventional technologies, it is necessary for a service provider to hold personal information on service users.

When content is personalized, the service provider requests the service user for providing personal information. For example, when the service user uses a service provided by the service provider on the WWW, the service provider asks for a user registration and collects necessary personal information.

A server identifies a service user or a terminal device of the user which issues a service request based on a personal verification on a start of providing a service, or based on an HTTP cookie in the user terminal device. Then, the server personalizes content based on the personal information on the identified service user.

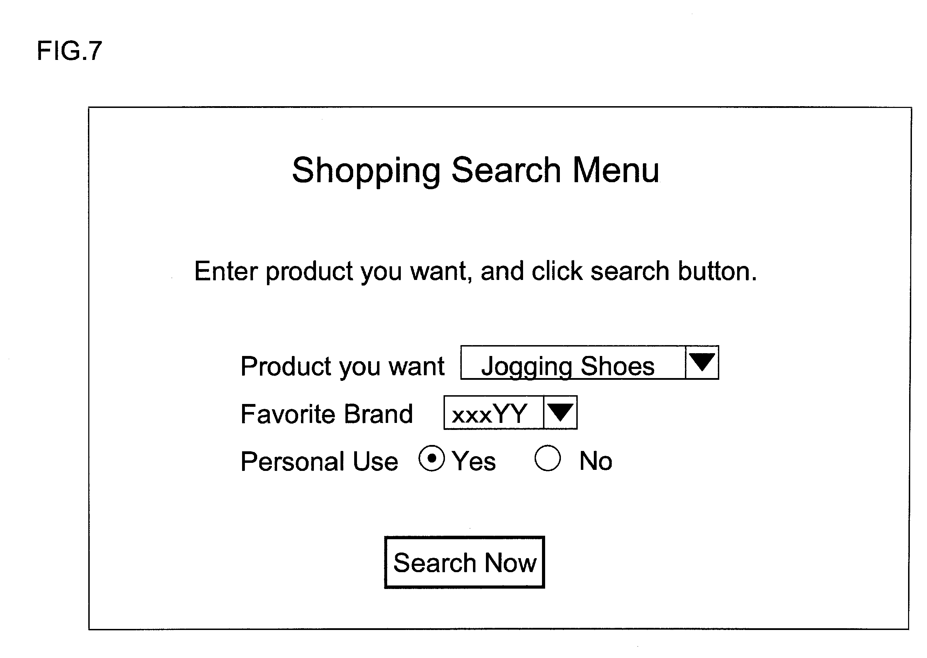

Referring to an actual display example of a display screen of the user terminal device, a description will now be given of this situation. FIG. 7 shows a search menu screen. This menu screen is a search screen for a user to use user's own portable terminal device or the like to search for a pair of shoes which the user wants. The user enters "jogging shoes" as a product which the user wants, and "xxxYY" as a favorite brand, and specifies that the product to be searched for is to be used personally by the user.

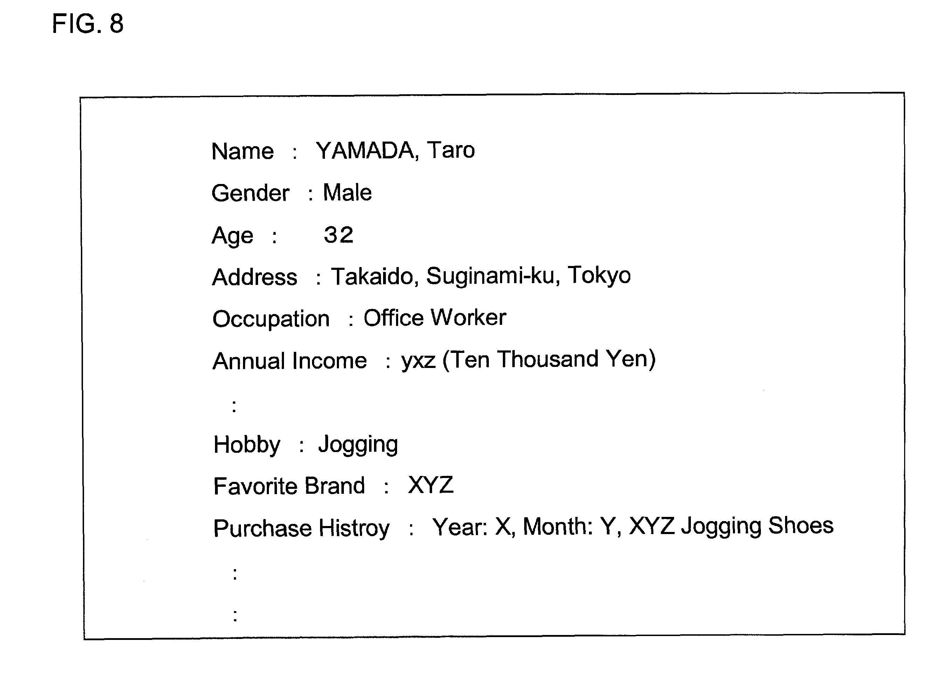

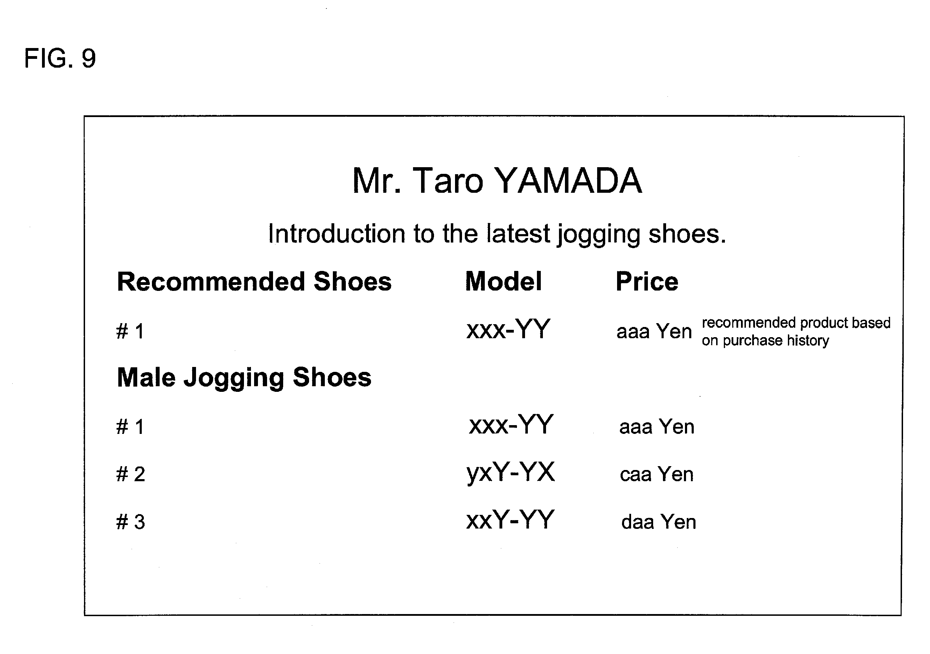

FIG. 8 shows an "example of personal information". The personal information includes information such as the name, gender, age, address, occupation, and annual income, and further, hobbies, preference information, and purchase history of a user. According to the conventional technologies, those pieces of information are stored in the service providing server. FIG. 9 shows an "example of a personalized content (1) " as an example of personalized content based on the information. On this occasion, a fact that the user is male, and the purchase history of the user are used as the personal information on the user.

With the technical background described above, a description will now be given of first to fourth examples of the present invention.

Example 1

1. Schematic Diagram

In Example 1 of the present invention, a description will be given of an example in which content shown by the browser does not contain other subcontent or hyperlinks, namely, an example of the case (a) of the above-described content classification.

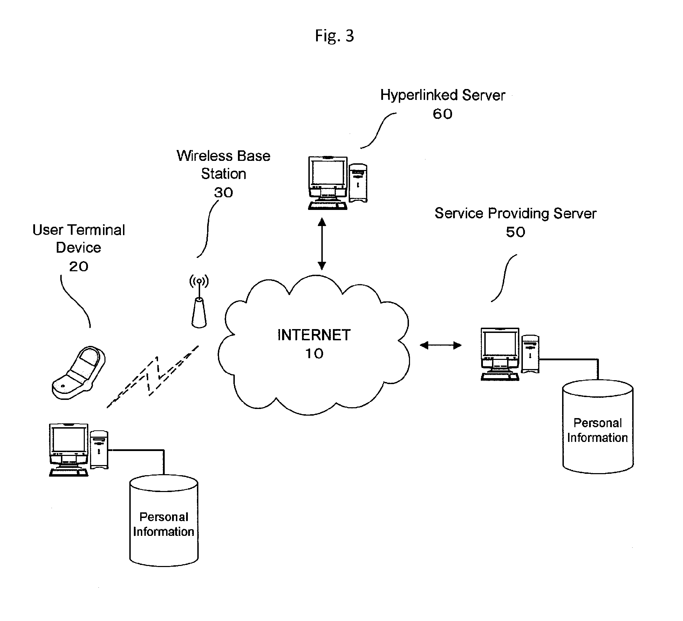

FIG. 3 shows an overview of the example of the present invention. Major components include a user terminal device 20, a proxy 40, and a service providing server 50. In this case, the user terminal device 20 is preferably a cellular phone on which a web browser is mounted. The proxy 40 is provided between the user terminal device and the service providing server. Moreover, the proxy 40 stores personal information on users in a database, and manages the personal information on users. The service providing server 50 is a server which provides the user with service information, and is preferably a web server. In FIG. 3, the proxy which stores the personal information on the users is provided between the service providing server and the user terminal device, thereby personalizing content, but the proxy (40) may be included in and thus integrated into the user terminal device (20).

2. Functional Block Diagram of Proxy

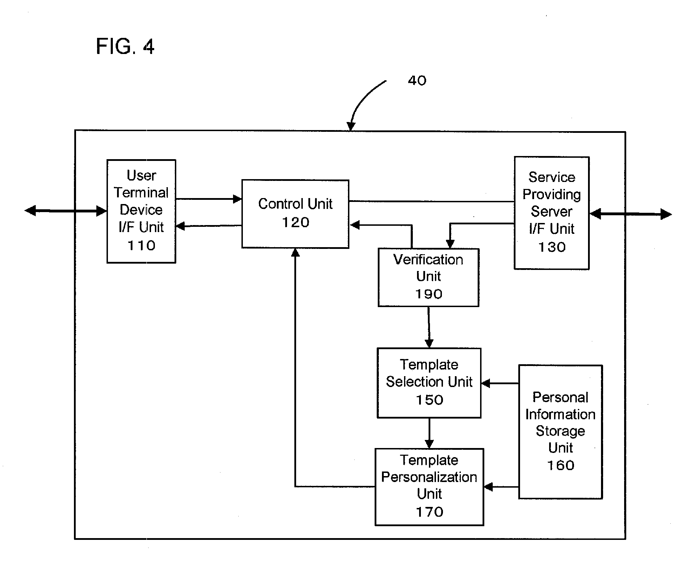

FIG. 4 describes a functional block diagram of the proxy (40) according to the present invention. Major components of the proxy include a user terminal device I/F unit (110), a control unit (120), a service providing server I/F unit (130), a template selection unit (150), a personal information storage unit (160), a template personalization unit (170), and a verification unit (190). Moreover, the service providing server is provided with a personalized content generation program (hereinafter, referred to as PCGP in the specification of the present invention) for generating personalized content. The PCGP contains a content template list, and rules for selecting one content template from the content template list based on personal information, and generating personalized content.

3. Basic Processing Flow

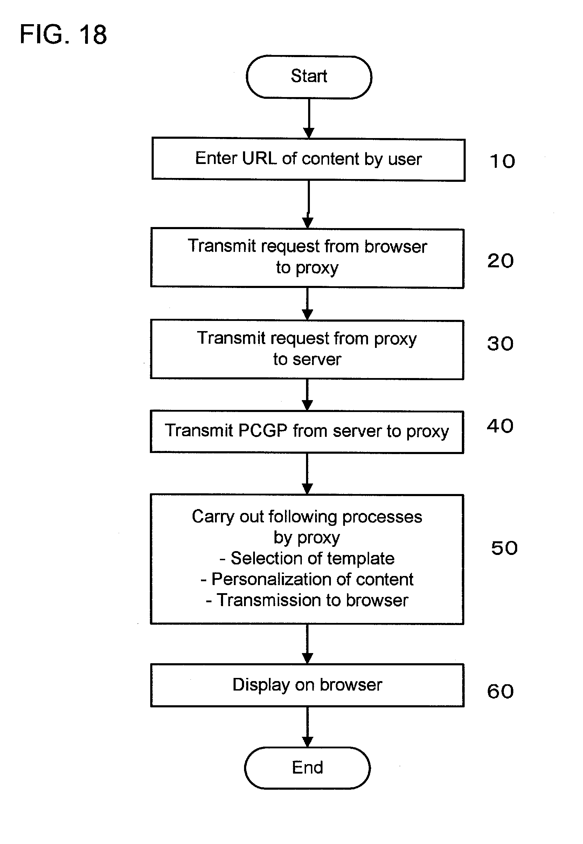

FIG. 18 is a flowchart describing Example 1 of the present invention.

10   Enter URL of content by user
20   Transmit request from browser to proxy
30   Transmit request from proxy to server
40   Transmit PCGP from server to proxy
50   Carry out following processes by proxy

-Selection of template

-Personalization of content

-Transmission to browser

60   Display on browser

Referring to FIGS. 3, 4, and 5A, a description will now be given of the process.

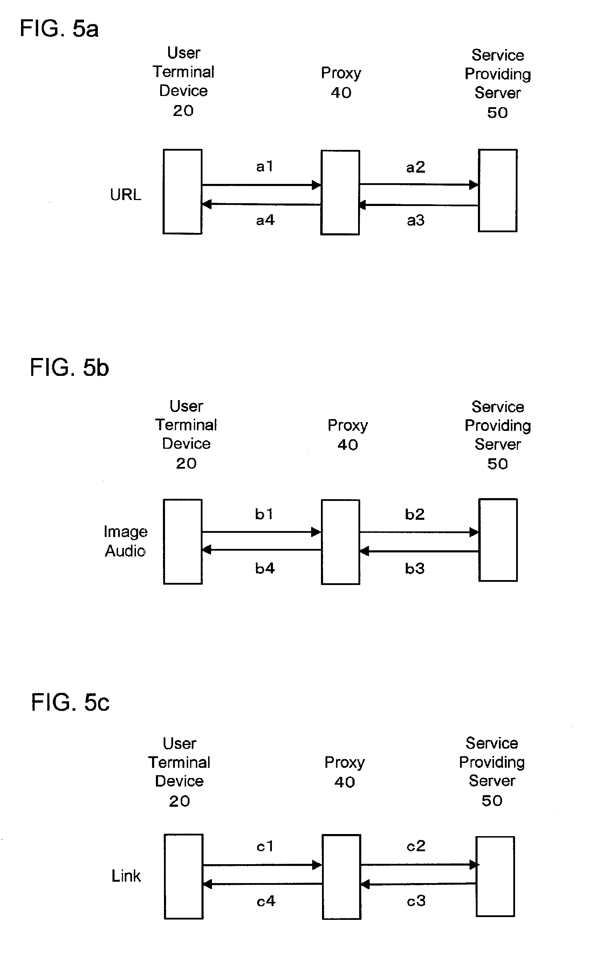

(1) The service user enters the URL of the desired content to be viewed on the browser on the user terminal device (20 of FIG. 3).
(2) The browser transmits the request for obtaining the content located at this URL to the proxy (a1 of FIG. 5A).
(3) The proxy transmits the content obtaining request to the service providing server according to this request (a2 of FIG. 5A).
(4) The service providing server transmits the PCGP corresponding to a path of the URL described in the received content obtaining request to the proxy (a3 of FIG. 5A). The PCGP, as described above, contains a content template list and rules. In this case, the content template is content including "holes" to be filled with personal information such as the name of the user, and, when the personal information is applied to the template, the "holes" are filled with proper personal information (such as the name), thereby generating content without the "holes". The rules are rules used to select one content template corresponding to this user from the content template list based on the personal information on the user.

(5) The proxy executes the received PCGP. On a first stage of execution of the PCGP, the PCGP is transmitted from the service providing server I/F unit (130) to the verification unit (190), and it is verified whether content generated by this PCGP will not leak the personal information. In general, the PCGP generates different content depending on values of personal information on users. For example, the PCGP generates different content for a male user and a female user. If content obtaining requests transmitted when those different content are drawn, or when hyperlinks contained in the content are traced are differently depending on the contents, the service provider can know whether the user is a male or a female based on the content. In other words, there is possibility of a leakage of the personal information. Thus, it is necessary to verify whether a set of messages transmitted are the same for respective content which can be generated by the PCGP, thereby verifying that the personal information will not leak. In Example 1 of the present invention, only content which do not contain references to other content is generated, so the verification is successful.
(6) Selection of Template
Then, the PCGP is transmitted to the template selection unit (150), and one proper content template is selected based on personal information stored in the personal information storage unit (160) (150 of FIG. 4).
(7) Personalization of Content
On a second stage of the execution of the PCGP, the template personalization unit (170) applies the personal information on the user stored in the personal information storage unit (160) to the selected content template, namely, fills "holes" with proper personal information, and generates a personalized content, thereby transmitting the personalized content to the control unit (120 of FIG. 4).

(8) The control unit (120 of FIG. 4) transmits the personalized content to the browser via the user terminal device I/F (110 of FIG. 4) (a4 of FIG. 5A).
(9) The browser draws the received content and displays the drawn content on the user terminal device.

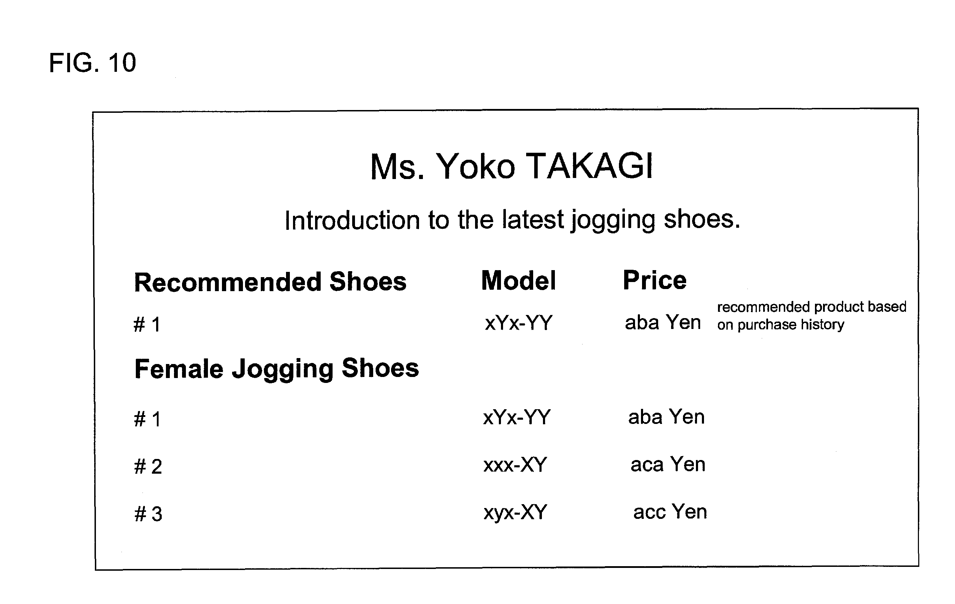

As described above, in Example 1 of the present invention, the description has been given of the case in which other content is not referred to. In Example 1 of the present invention, without providing the service provider with the personal information, it is possible to show examples (1) and (2) of the personalized content shown in FIGS. 9 and 10, respectively.

Example 2

In Example 2 of the present invention, a description will be given of an example in which content shown by the browser contains other subcontents, and does not contain links to other sites, namely, an example of the case (b) of the above-described content classification.

In general, content contains references to subcontent such as images and audio, and hyperlinks, and the browser transmits requests in order to obtain those subcontents, or when a service user clicks a hyperlink. The requests to be transmitted are different depending on content. The browser, in a process of processing content, transmits requests for those subcontents according to a sequence described in this content.

If the requests for those subcontents are directly transmitted to the service providing server, the service providing server may identify the content being viewed by this user based on the sequence of the requests or the number of accesses to specific content.

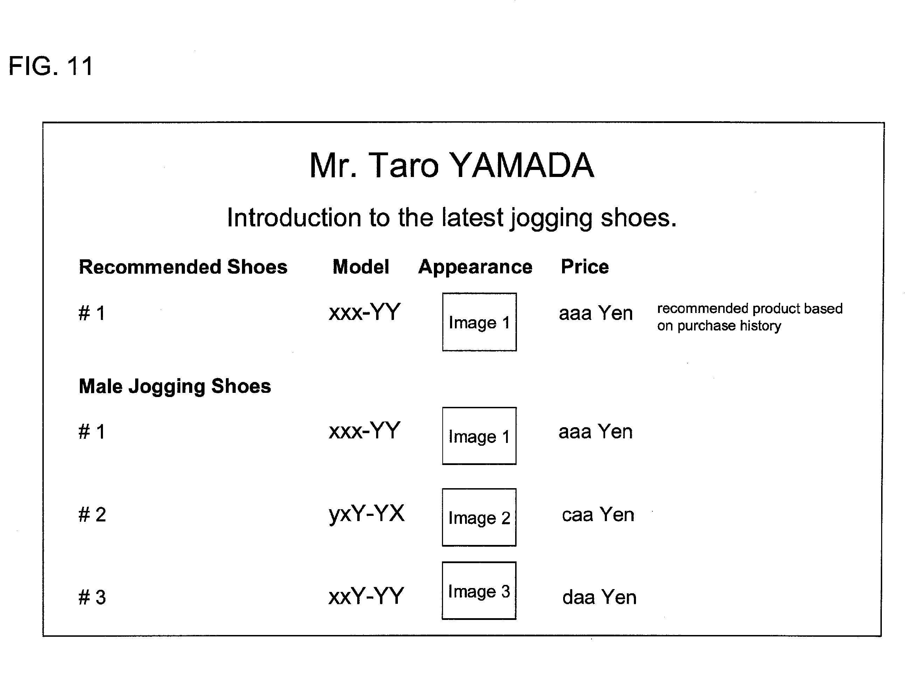

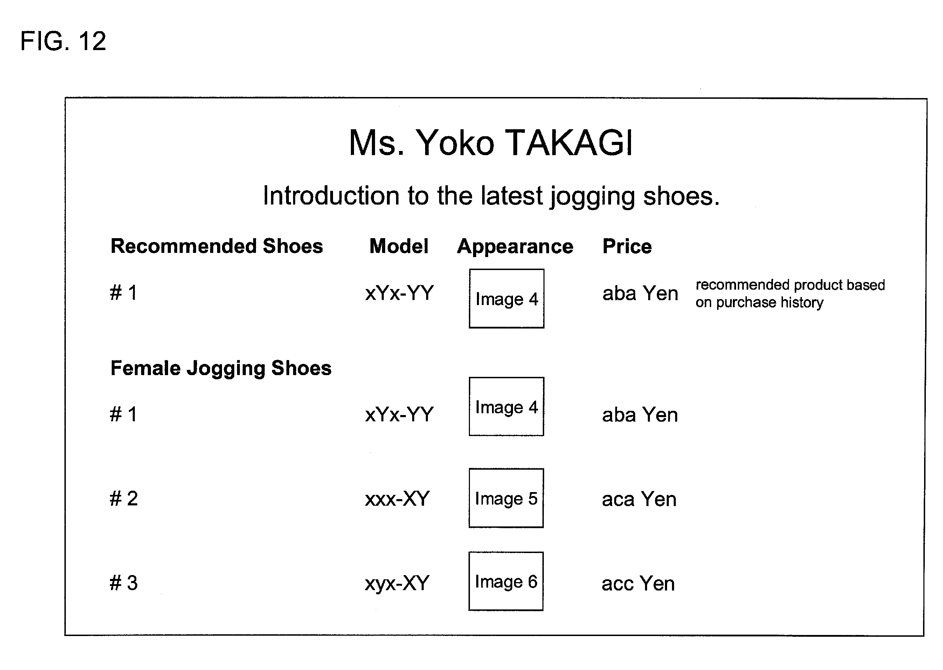

A description will now be given of examples (3) and (4) of personalized content shown in FIGS. 11 and 12, respectively.

In order to draw the personalized content (3), the browser transmits requests in a sequence of an image 1 -> an image 1 -> an image 2 -> an image 3. On the other hand, in order to access the personalized content (4), the browser makes accesses in a sequence of an image 4 -> an image 4 -> an image 5 -> an image 6.

Then, in those cases, the service providing server can determine whether the present user is a "male" or a "female" by monitoring the requests for the images. Moreover, depending on how content is generated, information such as an age group, an area of the address, and a range of the annual income of a user may be estimated by the server.

In general, the service providing server can estimate or determine personal information on a user by receiving the following information.

    1. Types of requests for obtaining subcontent
    2. Sequences of requests for obtaining subcontent
    3. The number of requests for obtaining the same subcontent

Those problems will now be discussed.

1. About Types of Requests for Obtaining Subcontent

It is easily conceivable that personal information is estimated based on types of requested content. However, any content, of one or more content that may be generated from one PCGP, is transmitted to the browser, in a case where the same requests are transmitted by the browser, when viewed from the service providing server, the content viewed by a user cannot be estimated.

Therefore, it is verified whether all requests generated from respective content generated from one PCGP are all the same. If those requests are different, by obtaining a sum of sets of requests for subcontent regardless of content viewed by a user and transmitting all the requests belonging to the sum of the sets to the server, it is possible to prevent the service providing server from estimating a template which a user has made access to.

For example, when the browser transmits requests for (an image 1 and an image 2) to draw content 1 and transmits requests for (the image 2 and an image 3) to draw content 2, if the proxy transmits requests for (the image 1, the image 2, and the image 3), which are a sum thereof, the service providing server cannot estimate a template accessed by a user.

2. About Sequences of Requests for Obtaining Subcontent

When the same requests are generated for drawing respective content, the service providing server may estimate content viewed by a user based on the sequence of the requests. However, in this case, if the proxy rearranges the sequence of the requests according to a predetermined rule, the service providing server cannot estimate the content viewed by the user. For example, if requests are transmitted in the lexicographical sequence in terms of the URL, the service providing server cannot estimate the content viewed by the user.

For example, when the browser transmits requests for (an image 1 and an image 2) to draw content 1 and transmits the requests for (the image 2 and the image 1) to draw a template 2, though the proxy needs to transmit requests for (the image 1 and the image 2), which are a sum thereof, the service providing server may estimate content which a user has accessed depending on whether the requests for (the image 1 and the image 2) are transmitted or the requests for (the image 2 and image 1) are transmitted. Then, by rearranging the sequence thereof according to a predetermined rule, for example, whether the requests are made for drawing the content 1 or for drawing the content 2, by rearranging the sequence in the younger sequence of the image 1 -> the image 2, the service providing server cannot estimate the content viewed by the user.

3. About Number of Requests for Obtaining Same Subcontent

When the same subcontent is accessed multiple times, and, depending on content, the different content make access to the same subcontents multiple times, the service providing server may estimate content viewed by a user.

For example, the browser transmits requests for (an image 1 -> the image 1 -> an image 2) to draw content 1 and transmits requests for (the image 1 -> an image 2 -> the image 2) to draw content 2, the types of the requests to obtain those subcontents are (the image 1 and the image 2). However, if the requests for drawing the content 1 are directly transmitted to the service providing server, because the two requests for the image 1 are present, the service providing server can estimate that the user is presently using the content 1.

In this way, when multiple content requests for the same subcontent are present, a sum of the set of the requests (the image 1, the image 1, and the image 2) for drawing the content 1 and the set of the requests (the image 1, the image 2, and the image 2) for drawing the content 2 is obtained. In other words, requests corresponding to (the image 1 and the image 2) are transmitted to the service providing server. As a result, the service providing server cannot estimate the content being viewed by the user.

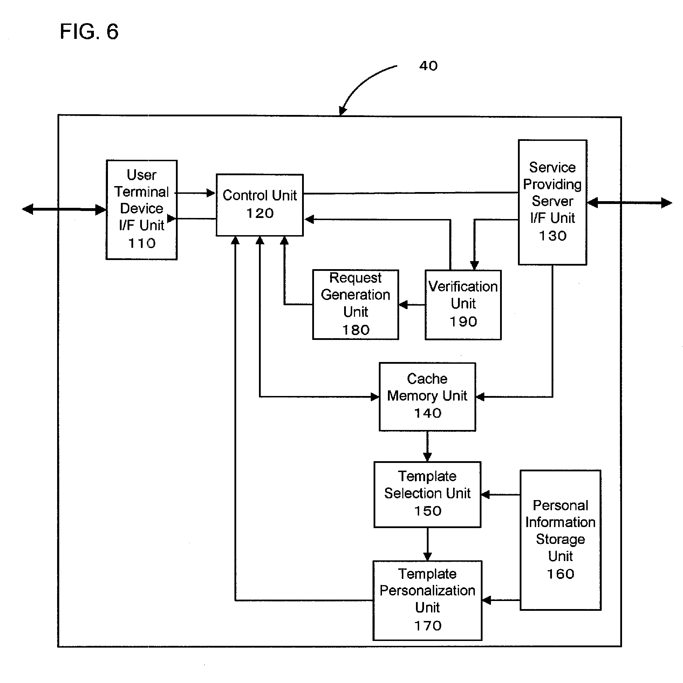

Here, the proxy stores the subcontents obtained from the service providing server in the cache memory unit (140 of FIG. 6), and, for a request for those subcontents, transmits the subcontents stored in the cache memory to the service user without accessing the service providing server. As a result, the service providing server will not estimate content viewed by the user based on the number of requests, and also, efficiency of access to the service providing server for obtaining the subcontent is improved.

As described above, the present invention takes the following measures in order to prevent personal information on users from leaking to the service providing server.

(1) Sets of requests for subcontents referred by respective content generated from one PCGP are determined.
(2) A sum of all the obtained request sets is determined and transmitted to the service providing server according to a certain rule such as the lexicographical sequence.
(3) The obtained subcontent is stored in the cache memory of the proxy, and the cache memory is searched for requests for the obtained subcontent.

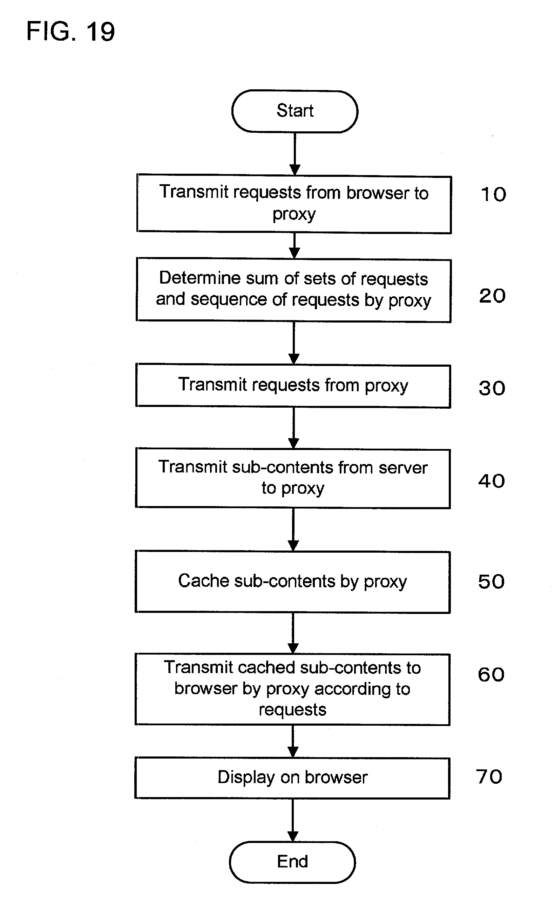

FIG. 19 is a flowchart describing Example 2 of the present invention. In this case, a description will be given starting from a state in which the browser shows content on the user terminal device, and subcontent is requested.

| 10 | Transmit requests from browser to proxy |
| 20 | Determine sum of sets of requests and sequence of requests by proxy |
| 30 | Transmit requests from proxy |
| 40 | Transmit subcontents from server to proxy |
| 50 | Cache subcontents by proxy |
| 60 | Transmit cached subcontent to browser by proxy according to requests |
| 70 | Display on browser |

Referring to FIGS. 3, 5B, and 6, a description will now be given. Referring to FIG. 6, a description will be given. Compared with FIG. 4, a difference is that the cache memory (140) and a request generation unit (180) are added. The verification unit (190) calculates requests possibly generated for all content generated from one PCGP. If all the requests possibly generated from the respective content is the same, all the numbers thereof are the same, and all sequences thereof are the same, personal information on a user will not leak as a result of accessing the subcontent.

If any one of the requests possibly generated from the respective contents is different in type, if any one of the numbers thereof is different, or if any one of the sequences of the requests is different, the request generation unit (180) calculates a sum of the sets of the requests possibly generated from the respective content, rearranges the requests in the sum of the sets according to the predetermined rule, and transmits the rearranged requests to the control unit 120.

The process until personalized content is generated by applying personal information is carried out as in Example 1, in which the template selection unit (150) selects one content template based on the personal information, and the template personalization unit (170) personalizes the selected template. The control unit (120) transmits the personalized content to the browser via the user terminal device I/F unit (110). Requests generated as a result of processing the personalized content by the browser are transmitted to the proxy (b1 of FIG. 5B). When the control unit (120) receives the requests, the control unit (120) transmits all rearranged requests contained in a sum of sets of requests transmitted from the request generation unit (180) in the specified sequence to the service providing server via the service providing server I/F unit (b2 of FIG. 5B). The service providing server transmits subcontent corresponding to the received respective requests to the proxy (b3 of FIG. 5B). The proxy stores the received subcontents in the cache memory unit (140). The control unit (120) searches the cache memory unit (140) for the subcontent corresponding to the requests transmitted from the browser. The searched subcontent is transmitted to the browser (b4 in FIG. 5B). The browser uses those subcontents to show them on the display unit of the user terminal device.

In Example 2 of the present invention, the description has been given of the case in which other content is referred to. According to the present invention, also in Example 2 of the present invention, without providing the service provider with the personal information, it is possible to display the examples (3) and (4) of the personalized content shown in FIGS. 11 and 12, respectively.

Example 3

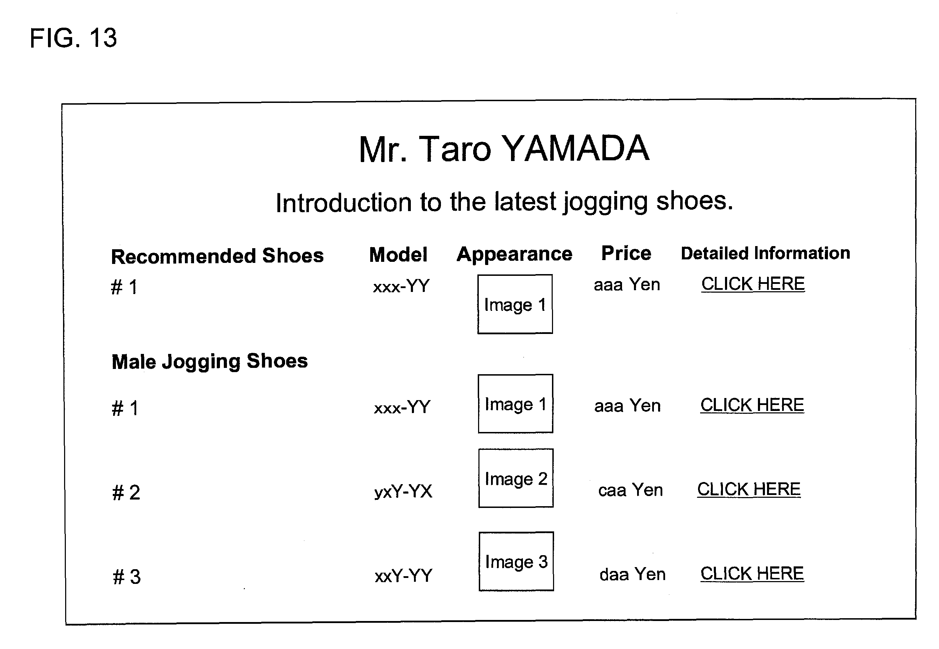

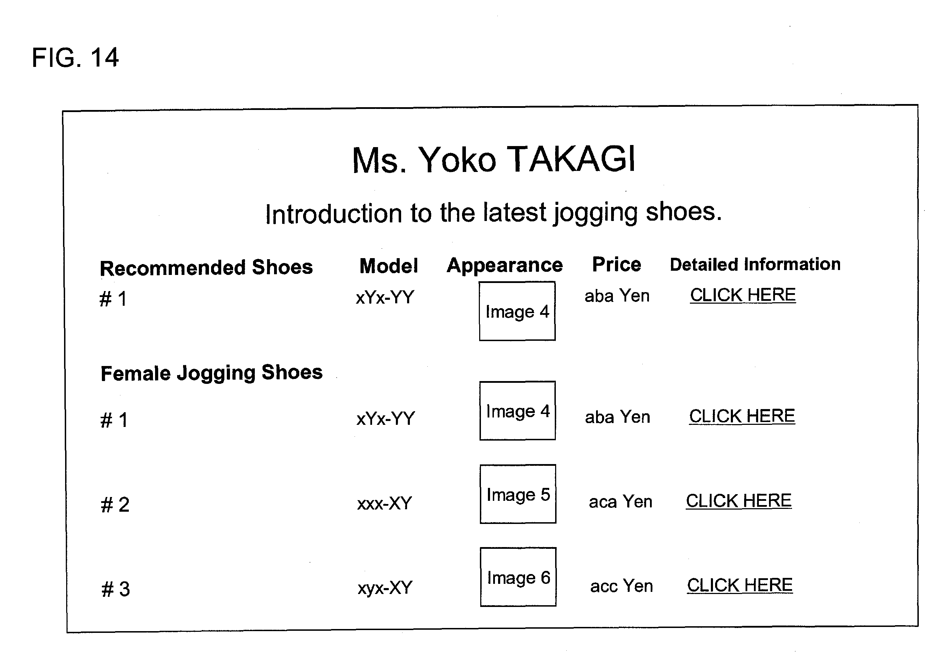

In Example 3 of the present invention, a description will be given of an example in which content shown by the browser contains hyperlinks to other content (web pages), namely, an example of the case (c). However, for the sake of simplicity, a description will be given only of a process relating to the hyperlinks. Subcontents are processed as in Example 2 of the present invention. Examples (5) and (6) of the personalized content shown in FIGS. 13 and 14 show that portions indicated by "Click here" in a "Detailed information" column are hyperlinked.

In this case, if a user accesses detailed information ("Click here") corresponding to an "image 1" of "#1" in the example (5) of the personalized contents, the service providing server can determine the content presently viewed by the user, and can estimate that this user is a male. On the other hand, if a user accesses detailed information ("Click here") corresponding to an "image 4" of "#1" in the example (6) of the personalized content, the service providing server can determine the content presently viewed by the user, and can estimate that this user is a female.

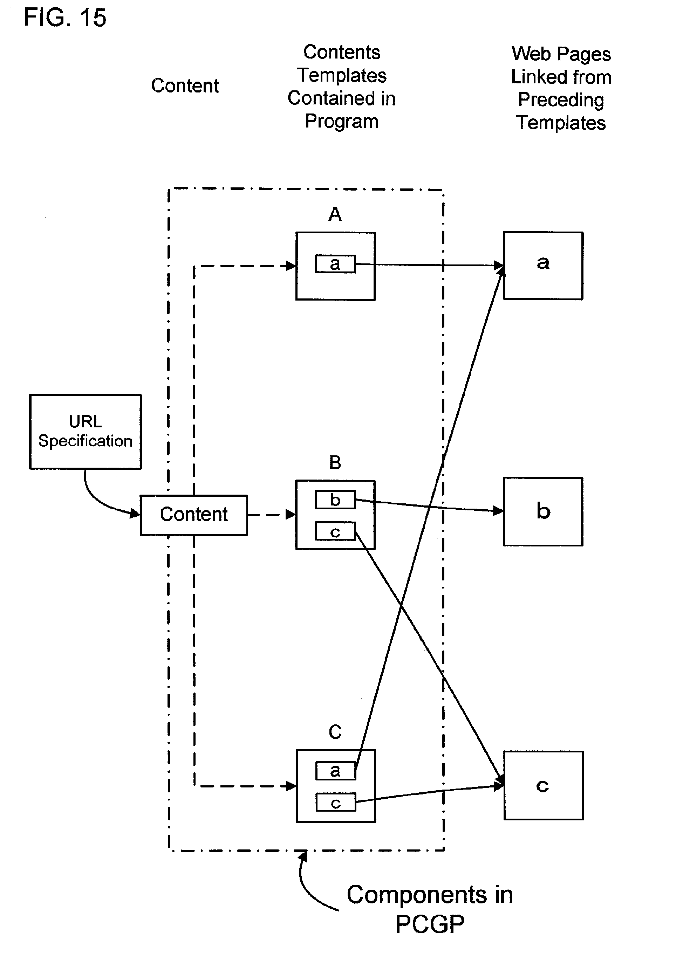

Referring to FIG. 15, a description will be given. A service user specifies a predetermined URL, and, as broken arrows show, there are three content templates A, B, and C each contained in a PCGP located at this URL. Those are enclosed by a long-dashed and short-dashed line in FIG. 15. From those content templates, a proper content template is selected based on personal information on the user. In this case, further, the content template A contains a hyperlink "a", and is hyperlinked to a web page "a" as shown by a solid arrow. The content template B contains hyperlinks "b" and "c", and is hyperlinked to web pages "b" and "c" as shown by solid arrows. The content template C contains the hyperlinks "a" and "c", and is hyperlinked to the web pages "a" and "c" as shown by solid arrows. When the web page "b" is accessed, it can be determined that the content being viewed by the user is generated from the content template "B". Moreover, when the web pages "a" and "c" are accessed, it can be determined that the content being viewed by the user is generated from the content template "C".

In general, when a web page linked from only a predetermined content is accessed, it is possible to determine the content being viewed by the user based on the access information, and then to estimate personal information on the user based on the viewed content. Moreover, a larger amount of personal information may be estimated based on multiple pieces of access information.

On the other hand, if requests issued for obtaining hyperlinked content is the same among content that is generated from a single PCGP, it is not possible to infer which content a user browses from the access information. On this occasion, a sequence of accesses to the hyperlinks can be arbitrarily selected by the user, so it is thus impossible to estimate the content which the user is accessing based on information on the sequence of the accesses.

Therefore, the present invention verifies that personal information on a user will not leak to the service providing server in the following manner.

[Method of Verification and Process after Verification]

(1) Verify that respective hyperlinked content obtaining requests possibly generated from multiple content templates generated from one PCGP are the same.
(2) If the hyperlinked content obtaining requests are respectively the same, namely, if the verification is successful, a personalized content is transmitted to a user.
(3) If the hyperlinked content obtaining requests are not respectively the same, namely, if the verification is not successful, though a personalized content is transmitted to the user, a "warning" that personal information may be leaked based on content viewed by the user is generated when the user accesses the hyperlink. The example in FIG. 15 is to be considered.

Since a hyperlinked content obtaining request for the content template A is "a", hyperlinked content obtaining requests for the content template B are "b and c", and hyperlinked content obtaining requests for the content template C are "a and c", {a} ≠ {b, c} ≠ {a, c}, and the verification thus fails.

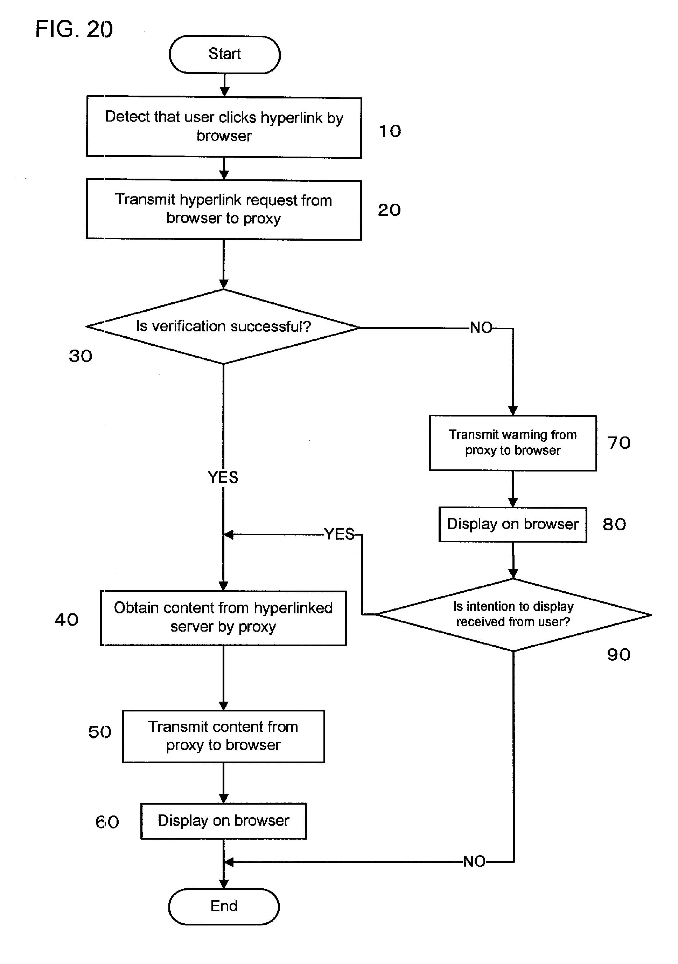

FIG. 20 is a flowchart describing Example 3. On this occasion, a description will be given starting from a state in which the browser shows content on the user terminal device, and content corresponding to a hyperlink is requested. The description will be given assuming that the verification in the step 50 ("The proxy carries out the following processes") in FIG. 18, namely the verification whether all requests possibly generated by clicking hyperlinks on respective content is the same, has been carried out.

| | |
|---|---|
| 10 | Detect that user clicks hyperlink by browser |
| 20 | Transmit hyperlink request from browser to proxy |
| 30 | Is verification successful? |
| 40 | Obtain content from hyperlinked server by proxy |
| 50 | Transmit content from proxy to browser |
| 60,80 | Display on browser |
| 70 | Transmit warning from proxy to browser |
| 90 | Is intention to display received from user? |

A description will now be given of the process flow. The verification unit (190) in FIG. 6 calculates sets of hyperlinks contained in all the respective contents possibly generated from content templates contained in an obtained PCGP. If all the sets of the hyperlinks contained in the respective content are the same, namely, the verification is successful, personal information on a user will not leak when the user accesses the hyperlink.

It should be noted that the process until a personalized content is generated by applying the personal information is carried out as in Example 2 of the present invention, in which the template selection unit (150) selects one content template based on the personal information, and the template personalization unit (170) personalizes the selected template. This personalized content is transmitted to the browser via the control unit (120).

If the verification is successful, the hyperlinked content obtaining request generated when the user clicks on the hyperlink contained in the personalized content is transmitted to the proxy (c1 in FIG. 5C). When the control unit (120) receives this request, the control unit (120) transmits this request to the service providing server via the service providing server I/F unit (c2 in FIG. 5C). The service providing server transmits the content corresponding to the received request to the proxy (c3 in FIG. 5C). The proxy transmits the received content to the browser of the user terminal device (c4 of FIG. 5C). The browser displays the received content.

If the sets of the hyperlinks contained in the respective content are not the same, namely, the verification is not successful, though a process in which the personalized content is transmitted to the browser via the control unit (120), and the hyperlinked content obtaining request generated when the user clicks on the hyperlink contained in the personalized content is transmitted to the proxy (c1 in FIG. 5C) is the same as the successful case, when the control unit (120) receives the hyperlinked content obtaining request, the control unit (120) warns the browser that "If the hyperlinked content obtaining request is transmitted to the destination of the hyperlink, personal information on the user may be estimated" (c4 in FIG. 5) . The browser displays the received warning.

If the user still requests for the access despite of this "warning", the request is transmitted to the service providing server (c2 in FIG. 5C). The hyperlinked content is transmitted to the browser by way of a route of c3 -> c4 (FIG. 5C), and is shown thereupon.

If the user stops the access following this "warning", the access will not be made.

Example 4

In Example 4 of the present invention, a description will be given of an example in which content shown by the browser contains hyperlinks to other content, the service providing server collects the content together, and transmits it to the proxy, and the proxy stores the linked content in the cache memory. As in Example 3, the description will be given only of a process relating to the hyperlinks.

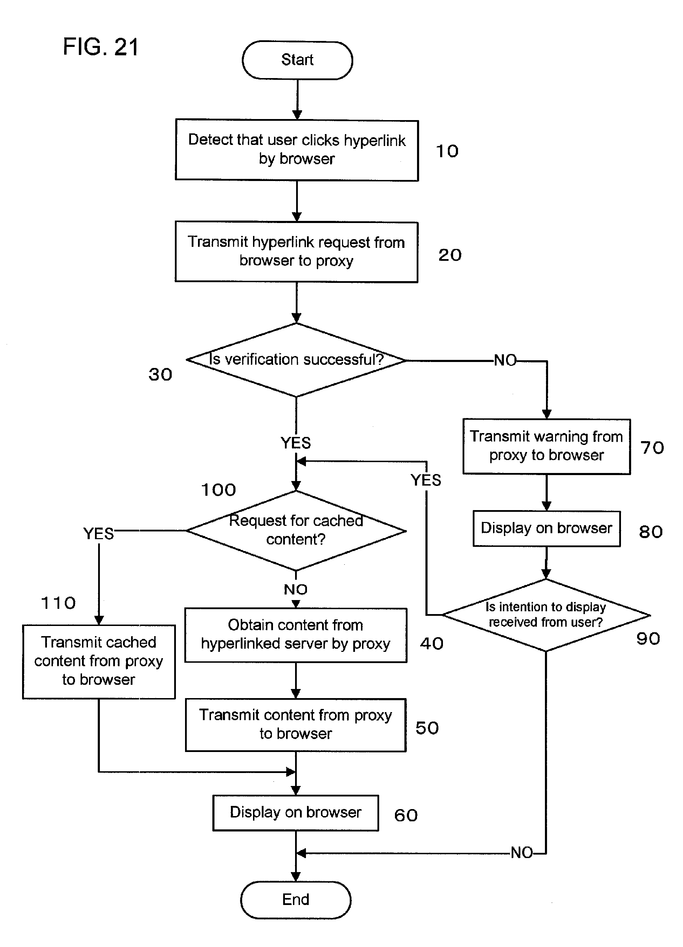

FIG. 21 is a flowchart describing Example 4. On this occasion, the browser shows content on the user terminal device, and a description will be given starting from a state in which a hyperlink is requested. The description will be given assuming that the verification in the step 50 ("The proxy carries out the following processes") in FIG. 18, and the process to store content linked from the template in the cache memory have been carried out.

| | |
|---|---|
| 10 | Detect that user clicks hyperlink by browser |
| 20 | Transmit hyperlink request from browser to proxy |
| 30 | Is verification successful? |
| 40 | Obtain content from hyperlinked server by proxy |
| 50 | Transmit content from proxy to browser |
| 60, 80 | Display on browser |
| 70 | Transmit warning from proxy to browser |
| 90 | Is intention to display received from user? |
| 100 | Request for cached content? |
| 110 | Transmit cached content from proxy to browser |

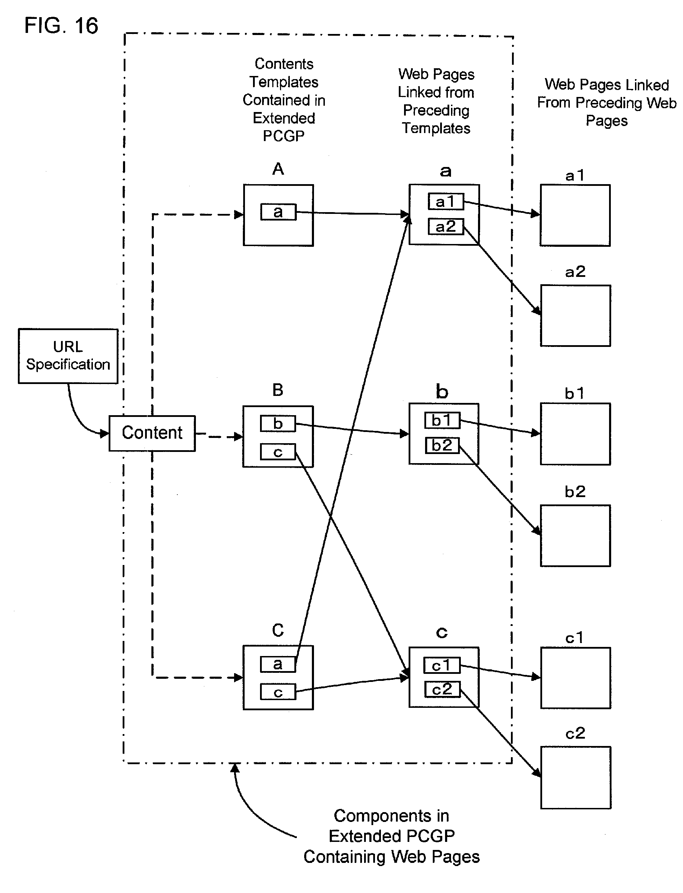

Referring to FIG. 16, a description will now be given of a case in which web pages are hyperlinked. The service providing server transmits a PCGP which contains content templates A, B, and C along with web pages, "a", "b", and "c", linked therefrom as a set, which is referred to as "extended PCGP" hereinafter, to the proxy. Those are enclosed by a long-dashed short-dashed line in FIG. 16.

The proxy receives this "extended PCGP", and verifies that the "extended PCGP" will not generate requests which possibly leak personal information in the following way.

[Verification Method]

(1) For respective content templates contained in the extended PCGP, sets of hyperlinks contained in the contents generated from the content template are generated.

In FIG. 16, the content templates contained in this extended PCGP are A, B, and C. Sets of hyperlinks contained in the respective content templates are:

$$A = \{a\}$$

$$B = \{b, c\}$$

$$C = \{a, c\}$$

(2) Selects a hyperlink (such as "a"), which hyperlinks a web page contained in this "extended PCGP", from the set of hyperlinks, and adds hyperlinks (such as "a1" and "a2") contained in this web page as elements of this set. It should be noted that a hyperlink once selected will not be selected again. A result thereof is represented as:

$$A=\{a, \ a1, \ a2\}$$

$$B=\{b, \ c, \ b1, \ b2\}$$

$$C=\{a, \ c, \ a1, \ a2\}$$

(3) For the respective sets of the hyperlinks, the operation of (2) is repeated until no hyperlinks to be selected are left. The number of the web pages contained in the extended PCGP is finite, and this iteration thus always ends.

$$A=\{a, \ a1, \ a2\}$$

$$B=\{b, \ c, \ b1, \ b2, \ c1, \ c2\}$$

$$C=\{a, \ c, \ a1, \ a2, \ c1, \ c2\}$$

(4) From all the sets of the hyperlinks, remove the hyperlinks (such as "a") linking the web pages contained in this extended PCGP. A result thereof is represented as:

$$A=\{a1, \ a2\}$$

$$B=\{b1, \ b2, \ c1, \ c2\}$$

$$C=\{a1, \ a2, \ c1, \ c2\}$$

The sets which have undergone this operation are sets

of the hyperlinks which personalized content generated from a corresponding template possibly transmits a request to the service providing server. If those sets are not the same, personal information may leak to the service provider.

(5) Verify that all the sets corresponding to the respective templates are the same. If all the sets are the same, the verification is successful, and otherwise, the verification fails.

In the example shown in FIG. 16,

$$\{a1, \ a2\}$$

and

$$\neq \{b1, \ b2, \ c1, \ c2\}$$

and

$$\neq \{a1, \ a2, \ c1, \ c2\},$$

the verification thus fails.

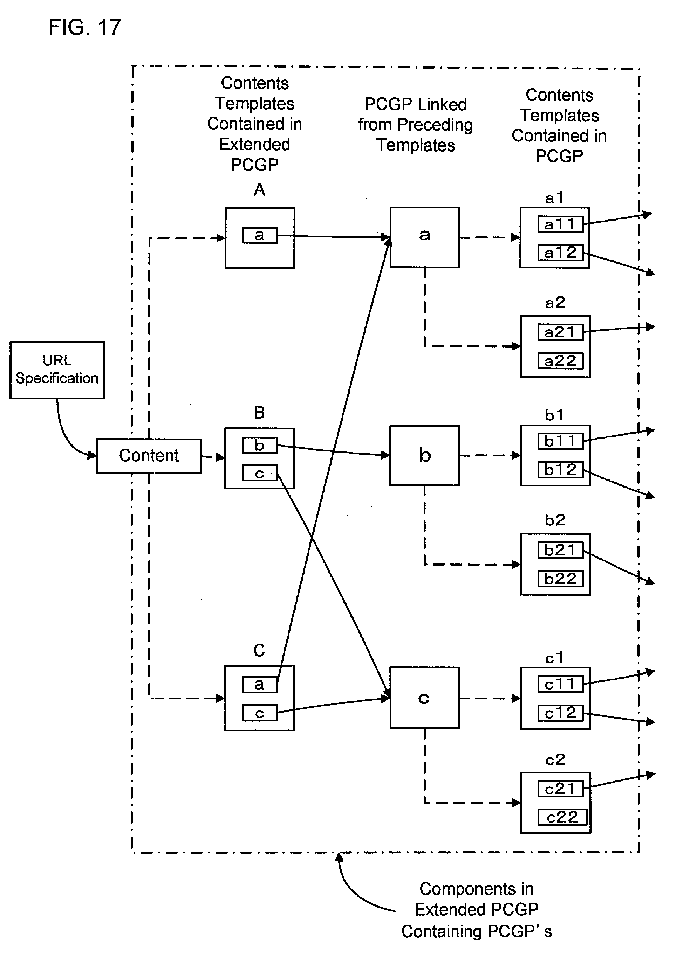

Though the description has been given of the case in which a web page is hyperlinked, a web page may not be hyperlinked, but a PCGP (or an extended PCGP) may be hyperlinked (FIG. 17). An extended PCGP containing PCGP's are enclosed by a long-dashed short-dashed line in FIG. 17. In this case, the hyperlinked PCGPs are first verified. In other words, when PCGPs are nested, an inner PCGP is verified first. Referring to FIG. 17, a description will now be given. For a PCGP, multiple web pages are to be further generated. In FIG. 17, content "a" pointed by a hyperlink "a" contained in a content template A is a PCGP, which contains content templates "a1" and "a2". Moreover, if hyperlinks "a11" and "a12" are further linked from "a1", and hyperlinks "a21" and "a22" are further linked from "a2", sets of hyperlinks are obtained for a1 and a2, and the PCGP "a" is thus verified first.

If the verification is successful, the hyperlinks contained in the content generated by the hyperlinked PCGP "a" are added as elements of the set of the hyperlinks of the content template A. If the verification fails, the overall verification also fails, and it is thus not necessary to verify other PCGP's such as "b" and "c".

(6) In Case of Successful Verification

The contents contained in this extended PCGP are stored in the cache memory unit (140). Moreover, a template is selected in the template selection unit (150), the selected template is transmitted to the template personalization unit (170), and personalized content is generated. The generated personalized content is transmitted to the user terminal device via the user terminal device I/F unit (110).

(7) In Case of Failed Verification

As a process for this case, as inExample 3, personalized content is transmitted to the user. When the user accesses the link, a "warning" that personal information may leak from content being viewed by the user is shown.

(8) If the user clicks on a hyperlink to content contained in this extended PCGP, a request is transmitted to the proxy. The proxy transmits the content stored in the cache memory unit (140) to the user terminal device. It should be noted that if the content is a PCGP or an extended PCGP, the proxy generates and transmits personalized content.

DESCRIPTION OF REFERENCE NUMERALS

10: Internet
20: user terminal device
30: wireless base station
40: proxy
50: service providing server
60: hyperlinked server
110: user terminal device I/F unit
120: control unit
130: service providing server I/F unit
140: cache memory unit
150: template selection unit
160: personal information storage unit
170: template personalization unit
180: request generation unit
190: verification unit

**Claims**

1. A personal information leakage preventive system in a system where a service providing server, a proxy, and a user terminal device used by a service user are connected with each other via a network, comprising the following means (a) to (e):

(a) means for transmitting, by the user terminal device, a content obtaining request which is used for obtaining content on the service providing server to the proxy;
(b) means for, by the proxy:

receiving the content obtaining request; and transmitting the content obtaining request to the service providing server;

(c) means for transmitting, by the service providing server, one or more content templates corresponding to the content obtaining request, and a rule, which is used to select one content template by using personal information on the service user and to generate content reflecting the personal information on the user from the content template, to the proxy;
(d) means for, by the proxy:

selecting one content template by using the personal information on the user based on the rule;
generating content reflecting the personal information on the user from the content template; and
transmitting the content to the user terminal device; and

(e) means for displaying, by the user terminal device, the content by using a browser software program.

2. The personal information leakage preventive system according to claim 1, upon the user terminal device displaying the content by using the browser software program, further comprising the following means (a) to (g):

(a) means for, upon subcontent being necessary for displaying the content, transmitting, by the user terminal device, a subcontent obtaining request which is used for obtaining the subcontent to the proxy;
(b) means for receiving, by the proxy, the subcontent obtaining request;
(c) means for, by the proxy:

determining sets of subcontent obtaining requests necessary for displaying content generated from the each content template for each of the content; and
transmitting, upon each of the sets of the subcontent obtaining requests being the same, the subcontent obtaining requests contained in the each of the sets of the subcontent obtaining requests in a predetermined sequence to the service providing server;

(d) means for, by the proxy:

determining sets of subcontent requesting requests necessary for displaying contents generated from the each content template for each of the contents; and

transmitting, upon each of the sets of the subcontent obtaining requests not being the same, all the subcontent obtaining requests in a predetermined sequence to the service providing server;

(e) means for transmitting, by the service providing server, subcontent corresponding to all the received subcontent obtaining requests to the proxy;

(f) means for, by the proxy:

storing the received subcontent; and of the stored subcontents,
transmitting the subcontent requested by the user terminal device to the user terminal device; and

(g) means for displaying, by the user terminal device, the subcontent by using the browser software program.

3. The personal information leakage preventive system according to claim 1 or 2, in which the network comprises one or more hyperlinked server, and after the user terminal device uses the browser software program to display the content, further comprising the following means (a) to (g):

(a) means for, upon receiving an operation for accessing a hyperlink from the user, transmitting, by the user terminal device, a hyperlinked content obtaining request for obtaining a hyperlinked content to the proxy;
(b) means for receiving, by the proxy, the hyperlinked content obtaining request from the user terminal device;
(c) means for, by the proxy:

determining sets of hyperlinked content obtaining requests corresponding to hyperlinks contained in content for each of the contents generated from the each content template; and
transmitting, upon each of the sets being the same, hyperlinked content obtaining requests to the hyperlinked server;

(d) means for, by the proxy:

determining sets of hyperlinked content obtaining requests corresponding to hyperlinks contained in each content for each of the contents generated from each content template; and
transmitting, upon each of the sets of the hyperlinked content obtaining requests not being the same, a predetermined warning message to the user terminal device;

(e) means for, by the hyperlinked server:

receiving the hyperlinked content obtaining request; and
transmitting a corresponding content to the proxy;

(f) means for transmitting, by the proxy, the received content to the user terminal device; and
(g) means for displaying, by the user terminal device, the received content or the predetermined warning message by using the browser software program.

4. A personal information leakage preventive system in a system where a service providing server, a proxy, a hyperlinked server, and a user terminal device used by a service user are connected with each other via a network, comprising the following means (a) to (i):

(a) means for transmitting, by the user terminal device, a content obtaining request which is used for obtaining content on the service providing server to the proxy;
(b) means for, by the proxy:

receiving the content obtaining request; and
transmitting the content obtaining request to the service providing server;

(c) means for transmitting, by the service providing server, a content template corresponding to the content obtaining request, a rule, which is used to select one content template based on the personal information and to generate content reflecting the personal information on the user from the content template, and contents, which are referred to by hyperlinks contained in the content templates;
(d) means for storing, by the proxy, the content template and the rule, and the content referred to by the hyperlink in a cache memory;
(e) means for, by the proxy:

determining, for each content template, a set of hyperlink obtaining requests corresponding to hyperlinks that are contained in content generated from the content template or are contained in content that are linked by hyperlinks in the contents and are stored in cache memory, and link to content other than any content in the cache memorye;

determining whether each of the sets is the same; and

transmitting, upon each set being not the same, a predetermined warning message to the user terminal device;

(f) means for, by the proxy:

selecting one content template by using the personal information on the user based on the rule;

generating content reflecting the personal information on the user; and

transmitting the content to the user terminal device;

(g) means for, by the user terminal device:

receiving and displaying the content; and transmitting, upon receiving an operation for accessing a hyperlink from the user, a hyperlinked content obtaining request for obtaining a hyperlinked content to the proxy;

(h) means for, by the proxy:

searching the cache memory for the content corresponding to the hyperlinked content obtaining request; and transmitting the content to the user terminal device; and

(i) means for displaying, by the user terminal device, the received content or displaying the predetermined warning message by using a browser software program.

5. The personal information leakage preventive system according to claims 1 to 4, wherein the user terminal device and the proxy are physically integrated.

6. A personal information leakage preventive method in a system where a service providing server, a proxy, and a user terminal device used by a service user are connected with each other via a network, the personal information leakage preventive method comprising the following steps (a) to (e):

(a) a step of transmitting, by the user terminal device, a content obtaining request which is used for obtaining content on the service providing server to the proxy;
(b) a step of, by the proxy:

receiving the content obtaining request; and

transmitting the content obtaining request to the service providing server;

(c) a step of transmitting, by the service providing server, one or more content templates corresponding to the content obtaining request, and a rule, which is used to select one content template by using personal information on the service user and to generate content reflecting the personal information on the user from the content template, to the proxy;
(d) a step of, by the proxy:

selecting one content template by using the personal information on the user based on the rule;

generating content reflecting the personal information on the user; and

transmitting the content to the user terminal device; and

(e) a step of displaying, by the user terminal device, the content by using a browser software program.

# FIG. 1

Hyperlinked Server
60

Wireless Base
Station
30

Service Providing Server
50

User Terminal
Device
20

INTERNET
10

Personal
Information

Personal
Information

## FIG. 2a

## FIG. 2b

## FIG. 2c

Fig. 3

Hyperlinked Server
60

Wireless Base
Station
30

Service Providing Server
50

User Terminal
Device
20

INTERNET
10

Personal
Information

Personal
Information

FIG. 4

40

FIG. 5a

User
Terminal
Device
20

Proxy
40

Service
Providing
Server
50

URL

a1

a2

a4

a3

FIG. 5b

User
Terminal
Device
20

Proxy
40

Service
Providing
Server
50

Image
Audio

b1

b2

b4

b3

FIG. 5c

User
Terminal
Device
20

Proxy
40

Service
Providing
Server
50

Link

c1

c2

c4

c3

## FIG. 6

FIG.7

Shopping Search Menu

Enter product you want, and click search button.

Product you want    Jogging Shoes ▼

Favorite Brand    xxxYY ▼

Personal Use   ⊙ Yes    ○ No

Search Now

EP 1 980 973 A1

## FIG. 8

Name  :  YAMADA, Taro

Gender  : Male

Age  :    32

Address  : Takaido, Suginami-ku, Tokyo

Occupation  : Office Worker

Annual Income  : yxz (Ten Thousand Yen)

   :

Hobby  :  Jogging

Favorite Brand  :  XYZ

Purchase Histroy  :   Year: X, Month: Y, XYZ Jogging Shoes

   :

   :

EP 1 980 973 A1

FIG. 9

Mr. Taro YAMADA

Introduction to the latest jogging shoes.

| Recommended Shoes | Model | Price | |
|---|---|---|---|
| # 1 | xxx-YY | aaa Yen | recommended product based on purchase history |

**Male Jogging Shoes**

| # 1 | xxx-YY | aaa Yen |
|---|---|---|
| # 2 | yxY-YX | caa Yen |
| # 3 | xxY-YY | daa Yen |

EP 1 980 973 A1

FIG. 10

# Ms. Yoko TAKAGI

## Introduction to the latest jogging shoes.

| Recommended Shoes | Model | Price | |
|---|---|---|---|
| # 1 | xYx-YY | aba Yen | recommended product based on purchase history |

**Female Jogging Shoes**

| | | |
|---|---|---|
| # 1 | xYx-YY | aba Yen |
| # 2 | xxx-XY | aca Yen |
| # 3 | xyx-XY | acc Yen |

EP 1 980 973 A1

## FIG. 11

# Mr. Taro YAMADA

## Introduction to the latest jogging shoes.

| Recommended Shoes | Model | Appearance | Price | |
|---|---|---|---|---|
| # 1 | xxx-YY | Image 1 | aaa Yen | recommended product based on purchase history |

**Male Jogging Shoes**

| | | | |
|---|---|---|---|
| # 1 | xxx-YY | Image 1 | aaa Yen |
| # 2 | yxY-YX | Image 2 | caa Yen |
| # 3 | xxY-YY | Image 3 | daa Yen |

EP 1 980 973 A1

FIG. 12

# Ms. Yoko TAKAGI

## Introduction to the latest jogging shoes.

| Recommended Shoes | Model | Appearance | Price | |
|---|---|---|---|---|
| # 1 | xYx-YY | Image 4 | aba Yen | recommended product based on purchase history |

**Female Jogging Shoes**

| | | | |
|---|---|---|---|
| # 1 | xYx-YY | Image 4 | aba Yen |
| # 2 | xxx-XY | Image 5 | aca Yen |
| # 3 | xyx-XY | Image 6 | acc Yen |

EP 1 980 973 A1

# FIG. 13

EP 1 980 973 A1

# Mr. Taro YAMADA

## Introduction to the latest jogging shoes.

| Recommended Shoes | Model | Appearance | Price | Detailed Information |
|---|---|---|---|---|
| # 1 | xxx-YY | Image 1 | aaa Yen | CLICK HERE |

**Male Jogging Shoes**

| | Model | Appearance | Price | Detailed Information |
|---|---|---|---|---|
| # 1 | xxx-YY | Image 1 | aaa Yen | CLICK HERE |
| # 2 | yxY-YX | Image 2 | caa Yen | CLICK HERE |
| # 3 | xxY-YY | Image 3 | daa Yen | CLICK HERE |

**FIG. 14**

# Ms. Yoko TAKAGI

## Introduction to the latest jogging shoes.

| Recommended Shoes | Model | Appearance | Price | Detailed Information |
|---|---|---|---|---|
| # 1 | xYx-YY | Image 4 | aba Yen | CLICK HERE |

**Female Jogging Shoes**

| | | | | |
|---|---|---|---|---|
| # 1 | xYx-YY | Image 4 | aba Yen | CLICK HERE |
| # 2 | xxx-XY | Image 5 | aca Yen | CLICK HERE |
| # 3 | xyx-XY | Image 6 | acc Yen | CLICK HERE |

EP 1 980 973 A1

# FIG. 15

Content

Contents
Templates
Contained in
Program

Web Pages
Linked from
Preceding
Templates

A

a → a

URL
Specification

Content

B

b → b

c

C

a

c → c

Components in
PCGP

## FIG. 16

Contents
Templates
Contained in
Extended
PCGP

Web Pages
Linked from
Preceding
Templates

Web Pages Linked
From Preceding Web
Pages

Components in
Extended PCGP
Containing Web Pages

FIG. 17

Contents Templates Contained in Extended PCGP

PCGP Linked from Preceding Templates

Contents Templates Contained in PCGP

Components in Extended PCGP Containing PCGP's

## FIG. 18

```
                    ┌─────────────┐
                    │    Start    │
                    └──────┬──────┘
                           │
                           ▼
         ┌──────────────────────────────┐
         │  Enter URL of content by user │     10
         └───────────────┬───────────────┘
                         │
                         ▼
         ┌──────────────────────────────┐
         │  Transmit request from browser│     20
         │           to proxy            │
         └───────────────┬───────────────┘
                         │
                         ▼
         ┌──────────────────────────────┐
         │   Transmit request from proxy │     30
         │           to server           │
         └───────────────┬───────────────┘
                         │
                         ▼
         ┌──────────────────────────────┐
         │ Transmit PCGP from server to proxy │  40
         └───────────────┬───────────────┘
                         │
                         ▼
         ┌──────────────────────────────┐
         │  Carry out following processes│
         │           by proxy            │     50
         │    - Selection of template    │
         │  - Personalization of content │
         │    - Transmission to browser  │
         └───────────────┬───────────────┘
                         │
                         ▼
         ┌──────────────────────────────┐
         │      Display on browser       │     60
         └───────────────┬───────────────┘
                         │
                         ▼
                  ┌─────────────┐
                  │     End     │
                  └─────────────┘
```

# FIG. 19

```
                    ┌─────────────┐
                    │    Start    │
                    └──────┬──────┘
                           │
                           ▼
        ┌──────────────────────────────────┐
        │  Transmit requests from browser to │    10
        │              proxy                 │
        └──────────────────┬─────────────────┘
                           │
                           ▼
        ┌──────────────────────────────────┐
        │  Determine sum of sets of requests │    20
        │  and sequence of requests by proxy │
        └──────────────────┬─────────────────┘
                           │
                           ▼
        ┌──────────────────────────────────┐
        │   Transmit requests from proxy     │    30
        └──────────────────┬─────────────────┘
                           │
                           ▼
        ┌──────────────────────────────────┐
        │  Transmit sub-contents from server │    40
        │              to proxy              │
        └──────────────────┬─────────────────┘
                           │
                           ▼
        ┌──────────────────────────────────┐
        │     Cache sub-contents by proxy    │    50
        └──────────────────┬─────────────────┘
                           │
                           ▼
        ┌──────────────────────────────────┐
        │   Transmit cached sub-contents to  │    60
        │  browser by proxy according to     │
        │             requests               │
        └──────────────────┬─────────────────┘
                           │
                           ▼
        ┌──────────────────────────────────┐
        │         Display on browser         │    70
        └──────────────────┬─────────────────┘
                           │
                           ▼
                    ┌─────────────┐
                    │     End     │
                    └─────────────┘
```

FIG. 20

```
                    ┌──────────┐
                    │  Start   │
                    └────┬─────┘
                         │
                         ▼
        ┌──────────────────────────────┐
        │ Detect that user clicks       │   10
        │ hyperlink by browser          │
        └───────────────┬──────────────┘
                         │
                         ▼
        ┌──────────────────────────────┐
        │ Transmit hyperlink request     │   20
        │ from browser to proxy          │
        └───────────────┬──────────────┘
                         │
                         ▼
                   ◇ Is verification ◇──────NO──────┐
              30   ◇   successful?  ◇               │
                                                    ▼
                                        ┌──────────────────────┐
                         YES            │ Transmit warning from │  70
                          │             │ proxy to browser      │
                          │◄───YES──┐   └───────────┬──────────┘
                          │         │               │
                          ▼         │               ▼
        ┌──────────────────────┐    │   ┌──────────────────────┐
   40   │ Obtain content from  │    │   │ Display on browser    │  80
        │ hyperlinked server   │    │   └───────────┬──────────┘
        │ by proxy             │    │               │
        └──────────┬───────────┘    │               ▼
                   │                 │       ◇ Is intention to ◇
                   ▼                 └───────◇ display received ◇
        ┌──────────────────────┐            ◇ from user?       ◇  90
   50   │ Transmit content     │
        │ from proxy to browser │
        └──────────┬───────────┘
                   │
                   ▼
   60   ┌──────────────────────┐
        │ Display on browser    │◄──────NO──────────┘
        └──────────┬───────────┘
                   │
                   ▼
             ┌──────────┐
             │   End    │
             └──────────┘
```

FIG. 21

Start

Detect that user clicks hyperlink by browser — 10

Transmit hyperlink request from browser to proxy — 20

30 — Is verification successful? — NO

YES

100 — Request for cached content?

YES

110 — Transmit cached content from proxy to browser

NO — Obtain content from hyperlinked server by proxy — 40

Transmit content from proxy to browser — 50

Display on browser — 60

Transmit warning from proxy to browser — 70

Display on browser — 80

Is intention to display received from user? — 90

YES

NO

End

## INTERNATIONAL SEARCH REPORT

| International application No. |
|---|
| PCT/JP2007/051257 |

A. CLASSIFICATION OF SUBJECT MATTER
*G06F21/24*(2006.01)i, *G06F13/00*(2006.01)i, *G06F17/30*(2006.01)i, *G06F21/20* (2006.01)i

According to International Patent Classification (IPC) or to both national classification and IPC

B. FIELDS SEARCHED

Minimum documentation searched (classification system followed by classification symbols)
G06F21/24, G06F13/00, G06F17/30, G06F21/20

Documentation searched other than minimum documentation to the extent that such documents are included in the fields searched
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2002-140309 A (Hitachi, Ltd.), 17 May, 2002 (17.05.02), Full text; all drawings & US 2002/0052798 A1 & EP 1221795 A2 | 1-6 |
| A | JP 2000-123023 A (Hitachi, Ltd.), 18 April, 2000 (18.04.00), Full text; all drawings (Family: none) | 1-6 |
| A | JP 2005-115829 A (Keio University), 28 April, 2005 (28.04.05), Full text; all drawings (Family: none) | 1-6 |

| ☒ Further documents are listed in the continuation of Box C. | ☐ See patent family annex. |
|---|---|

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 06 April, 2007 (06.04.07) | 17 April, 2007 (17.04.07) |

| Name and mailing address of the ISA/ Japanese Patent Office | Authorized officer |
|---|---|
| Facsimile No. | Telephone No. |

Form PCT/ISA/210 (second sheet) (April 2005)

**INTERNATIONAL SEARCH REPORT**

International application No.

PCT/JP2007/051257

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2002-132813 A  (Sharp Corp.),<br>10 May, 2002 (10.05.02),<br>Full text; all drawings<br>& US 2002/0103806 A1 | 1-6 |
| A | JP 2002-312377 A  (NEC Corp.),<br>25 October, 2002 (25.10.02),<br>Full text; all drawings<br>& US 2002/0156845 A1    & EP 1251436 A2 | 1-6 |
| A | ANINDYA DATTA et.al. "Proxy-Based Acceleration<br>of DynamicallyGenerated Content on the World<br>Wide Web: An Approach andImplementation"<br>In: ACM Transactions on Database Systems<br>June2004, Vol.29 No.2 p.403-443 | 1-6 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2002183092 A

**Non-patent literature cited in the description**

• **KOBAYASHI NAOKI ; SHIRANE KEITA.** *Type-based Information Flow Analysis for a Low-level Language,* vol. 20 (2), 2-21